# FASCICULE DE BREVET EUROPEEN

(11) **EP 3 389 068 B1**
(45) Date de publication et mention de la délivrance du brevet: **25.09.2019**
(21) Numéro de dépôt: 18167212.2
(22) Date de dépôt: 13.04.2018
(51) Int. Cl.: H01H 9/34

(54) **DISPOSITIF DE FILTRAGE DE GAZ DE COUPURE POUR UN APPAREIL DE COUPURE D'UN COURANT ÉLECTRIQUE ET APPAREIL DE COUPURE D'UN COURANT ÉLECTRIQUE COMPORTANT CE DISPOSITIF DE FILTRAGE**
VORRICHTUNG ZUR FILTERUNG VON SCHALTGASEN IN EINEM ELEKTRISCHEN SCHALTER UND ELEKTRISCHER SCHALTER UMFASSEND DIESE VORRICHTUNG
APPARATUS FOR FILTERING CUT-OFF GASES IN AN ELECTRICAL SWITCHING DEVICE AND ELECTRICAL SWITCHING DEVICE COMPRISING THIS APPARATUS

(30) Priorité: 14.04.2017 FR 1753310
(43) Date de publication de la demande: 17.10.2018
(73) Titulaire: Schneider Electric Industries SAS, 92500 Rueil-Malmaison (FR)
(72) Inventeur: PAVAGEAU, Vincent, 38050 Grenoble Cedex 09 (FR); DOMEJEAN, Eric, 38050 Grenoble Cedex 09 (FR); RIVAL, Marc, 38050 Grenoble Cedex 09 (FR)
(74) Mandataire: Lavoix

(56) Documents cités:
- EP-A1- 0 022 708
- EP-A1- 0 666 627
- DE-A1-102007 028 204

## Description

L'invention concerne un dispositif de filtrage de gaz de coupure pour un appareil de coupure d'un courant électrique. L'invention concerne également un appareil de coupure de courant électrique comprenant un tel dispositif de filtrage.

Dans le domaine des appareils de coupure d'un courant électrique à contact électrique séparable, tels que les disjoncteurs ou les contacteurs, il est connu d'utiliser des dispositifs de filtrage qui sont disposés au niveau de canaux d'évacuation en sortie de chambres de coupure d'arc électrique. Ces dispositifs de filtrage ont pour but de refroidir et de dépolluer les gaz de coupure qui sont émis lors de la coupure du courant électrique. Ces gaz de coupure résultent de l'apparition d'un arc électrique qui se forme entre les contacts électriques séparables au moment de leur séparation. Les gaz de coupure ainsi émis présentent une température élevée, généralement supérieure à 4000°C, et présentent en outre une pression élevée. Il est donc nécessaire, pour des raisons de sécurité, de refroidir et de dépolluer ces gaz de coupure lorsqu'ils sont évacués du boîtier de l'appareil électrique, notamment pour éviter un rebouclage du courant électrique à l'extérieur de l'appareil de coupure.

On connaît de nombreux dispositifs de filtrage utilisés pour atteindre cet objectif, mais ils présentent des inconvénients qui les rendent rédhibitoires dans certaines applications.

Par exemple, il est connu d'utiliser des dispositifs de filtrage comprenant des mousses céramiques à base de carbure de silicium, ou encore des céramiques poreuses à base d'alumine. Toutefois, de tels dispositifs peuvent conduire au détachement de particules isolantes qui se répandent vers l'intérieur de l'appareil de coupure et qui peuvent en entraver le bon fonctionnement.

On connaît également des dispositifs de filtrage basés sur des écrans comprenant des tissus métalliques à structure rep, par exemple décrites dans le brevet US 5 889 249 A. Toutefois, de tels dispositifs de filtrage comprenant des empilements multicouches de tels tissus métalliques présentent, de par leur structure même, un encombrement important et nécessitent en outre, pour leur fabrication, un façonnage extérieur.

De plus, de tels dispositifs de filtrage sont généralement utilisés en conjonction avec des éléments isolants, tels que des écrans ou des diffuseurs de gaz, dans le but d'empêcher le rebouclage d'un courant électrique. Mais de tels dispositifs apportent des contraintes structurelles et volumiques supplémentaires et ne fournissent pas un refroidissement suffisant lorsqu'ils sont utilisés avec des appareils de coupure contemporains présentant des niveaux de puissance élevés. C'est notamment le cas des dispositifs décrits dans le brevet EP 437 151 B1.

Le document EP 0 666 627 A1 concerne un absorbeur d'arc pour disjoncteur moyenne tension.

C'est donc à ces inconvénients qu'entend plus particulièrement remédier l'invention, en proposant un dispositif de filtrage des gaz de coupure pour un appareil de coupure d'un courant électrique, qui soit simple à réaliser et présentant une meilleure compacité, tout en ayant la capacité à être intégré au sein d'appareils de coupure existants pouvant présenter des formes complexes.

A cet effet, l'invention concerne un dispositif de filtrage de gaz de coupure pour un appareil de coupure d'un courant électrique, ce dispositif de filtrage comportant :
- un corps central poreux incluant des canaux longitudinaux et des canaux transversaux qui mettent en communication fluidique les canaux longitudinaux entre eux, les canaux longitudinaux présentant une forme recourbée ; et
- une peau extérieure étanche qui entoure le corps central et qui comporte des orifices d'entrée et des orifices de sortie, chaque canal longitudinal s'étendant entre un orifice d'entrée et un orifice de sortie, la peau extérieure et le corps central formant une pièce rigide d'un seul tenant réalisée en matière métallique.

Selon des aspects avantageux mais non obligatoires de l'invention, un tel dispositif de filtrage peut incorporer une ou plusieurs des caractéristiques suivantes, prises isolément ou suivant toute combinaison techniquement admissible :
- Les canaux longitudinaux présentent un diamètre variable.
- Le diamètre de l'orifice de sortie est inférieur au diamètre de l'orifice d'entrée correspondant, le diamètre intérieur du canal longitudinal qui débouche sur ses orifices d'entrée et de sortie diminuant depuis l'orifice d'entrée vers l'orifice de sortie.
- Le dispositif comporte des faces extérieures de forme recourbée, la courbure des canaux longitudinaux étant adaptée en fonction de la courbure desdites faces extérieures.
- La matière métallique est un alliage d'inconel.
- Le volume extérieur du dispositif de filtrage, délimité par les faces extérieures du dispositif de filtrage, est inférieur ou égal à 100 cm³.
- Le taux de remplissage du dispositif de filtrage est compris entre 5% et 60%, ce taux de remplissage étant défini comme étant égal au rapport du volume occupé par de la matière au sein du dispositif de filtrage, sur le volume total occupé par le dispositif de filtrage, ce volume total étant égal au volume délimité par les faces extérieures du dispositif de filtrage.
- Le dispositif de filtrage est fabriqué au moyen d'un procédé de fabrication additive par fusion laser directe de métal.

Enfin, selon un autre aspect, l'invention concerne un appareil de coupure d'un courant électrique, cet appareil comprenant :
- des contacts électriques séparables ;
- au moins une chambre d'extinction d'un arc électrique, ménagé à l'intérieur de l'appareil et incluant un empilement de plaques de séparation d'arc destinées à éteindre un arc électrique apparaissant lors de la séparation des contacts électriques, cette chambre de coupure étant reliée fluidiquement à l'extérieur de l'appareil par un canal d'évacuation des gaz de coupure ;
- un dispositif de filtrage des gaz de coupure, monté dans le canal d'évacuation.

Le dispositif de filtrage est conforme à un dispositif tel que décrit précédemment.

L'invention sera mieux comprise et d'autres avantages de celle-ci apparaîtront plus clairement à la lumière de la description qui va suivre, d'un mode de réalisation d'un dispositif de filtrage de gaz de coupure, donnée uniquement à titre d'exemple et faite en référence aux dessins annexés dans lesquels :
- la figure 1 représente schématiquement, selon une vue en coupe latérale, un appareil de coupure d'un courant électrique dans l'air à contacts électriques séparables comprenant un dispositif de filtrage selon l'invention ;
- la figure 2 est une représentation schématique, selon une vue en perspective, d'un dispositif de filtrage de gaz de coupure selon l'invention et équipant l'appareil de coupure de la figure 1 ;
- la figure 3 est une représentation schématique, selon une vue de dessus, du dispositif de filtrage de la figure 2 ;
- la figure 4 est une représentation schématique du dispositif de filtrage de la figure 3, selon une vue dans le plan de coupe IV-IV ;
- la figure 5 est une représentation schématique, selon une vue en coupe, d'une portion du dispositif de filtrage de la figure 2.

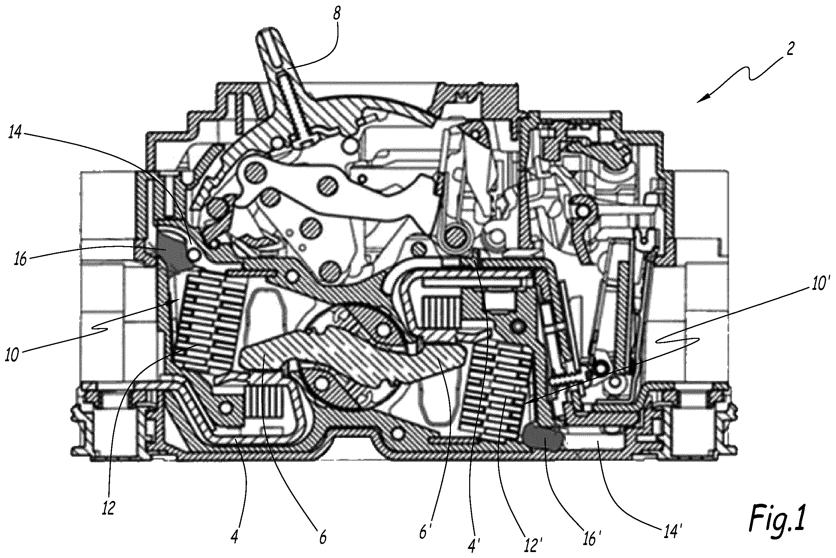

La figure 1 représente un appareil de coupure 2 d'un courant électrique à contacts électriques séparables et à coupure dans l'air.

Dans cet exemple, l'appareil 2 est un disjoncteur unipolaire à courant continu à basse tension et à haute intensité. Par exemple, l'appareil 2 est adapté pour fonctionner avec des tensions électriques inférieures à 1500 volts DC et avec des courants électriques de court-circuit d'intensité supérieure ou égale à 1 kA. En variante, l'appareil 2 peut être un disjoncteur à courant alternatif.

En variante, l'appareil 2 peut être différent. Il peut s'agir par exemple d'un contacteur. Il peut également s'agir d'un appareil multipolaire.

L'appareil 2 est destiné à être connecté à un circuit électrique pour en assurer la protection contre des défauts électriques, tels qu'un court-circuit ou une surintensité.

A cet effet, l'appareil 2 comporte des contacts électriques séparables, ici réalisés par l'association de contacts électriques fixes 4 et 4' solidaires d'un bâti de l'appareil 2 et de contacts électriques mobiles 6 et 6' qui sont déplaçables par rapport aux contacts fixes 4 et 4'.

Le déplacement des contacts électriques mobiles 6 et 6' est assuré au moyen d'un mécanisme de commande qui n'est pas décrit plus en détail dans ce qui suit. Ce mécanisme de commande peut être actionné soit manuellement par un opérateur, ici au moyen d'un levier de commande 8 situé en façade de l'appareil 2, soit par déclenchement automatique, en cas de défaut électrique détecté au moyen d'un détecteur intégré à l'appareil 2, tel qu'un détecteur thermique et/ou magnétique.

Les contacts électriques fixes 4 et 4' sont raccordés électriquement à des terminaux de raccordement de l'appareil 2.

Lorsque l'appareil 2 est dans un état fermé, les contacts mobiles 6 et 6' sont en contact électrique avec les contacts fixes 4 et 4' et assurent ainsi la circulation d'un courant électrique au sein de l'appareil 2. Lorsque l'appareil 2 est dans un état ouvert, les contacts mobiles 6 et 6' sont éloignés à distance des contacts fixes 4 et 4' pour empêcher la circulation d'un courant électrique.

L'appareil 2 comporte également des chambres de coupure d'arc 10 et 10' qui ont pour fonction d'assurer l'extinction d'un arc électrique lorsque l'appareil 2 est commuté vers son état ouvert alors qu'un courant électrique est en train de circuler. Chaque chambre de coupure 10, 10' est ainsi, dans cet exemple, associée et placée en face d'une zone de contact entre un contact fixe 4 et un contact mobile 6.

Les chambres de coupure 10 et 10' comportent chacune un empilement de tôles ou plaques de coupure 12 et un canal d'évacuation 14 d'évacuation des gaz de coupure qui débouche à l'extérieur du boîtier de l'appareil 2. Les plaques de l'empilement 12 ont pour fonction d'éteindre l'arc électrique en le fractionnant en une pluralité d'arcs distincts entre les plaques. Le canal d'évacuation 14 a pour fonction d'évacuer le gaz de coupure généré par l'arc électrique hors du boîtier de l'appareil 2.

En pratique, les gaz de coupure ne peuvent s'échapper en dehors de l'appareil 2 que par l'intermédiaire des canaux 14 et 14'. Par exemple, l'appareil 2 est délimité par un boîtier moulé étanche aux gaz.

L'appareil 2 comporte également un dispositif de filtrage 16 inséré dans le canal d'évacuation 14 et qui a pour fonction de refroidir et de dépolluer les gaz de coupure lors de leur évacuation.

Les chambres de coupure 10 et 10' sont ici identiques. La chambre de coupure 10' comporte notamment un empilement 12', un canal d'évacuation 14' et un dispositif de filtrage 16' qui sont analogues, respectivement, à l'empilement 12, au canal d'évacuation 14 et au dispositif de filtrage 16. En particulier, le dispositif de filtrage 16' est analogue au dispositif de filtrage 16 et assure les mêmes fonctions vis-à-vis du canal d'évacuation 14'. Le dispositif de filtrage 16' peut toutefois présenter une forme différente et/ou des dimensions différentes de celles du dispositif de filtrage 16.

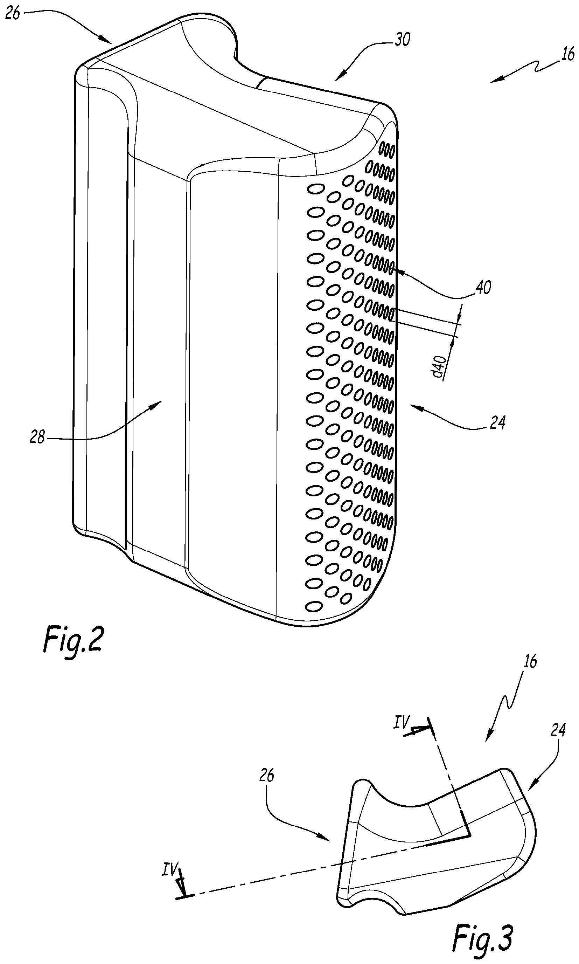

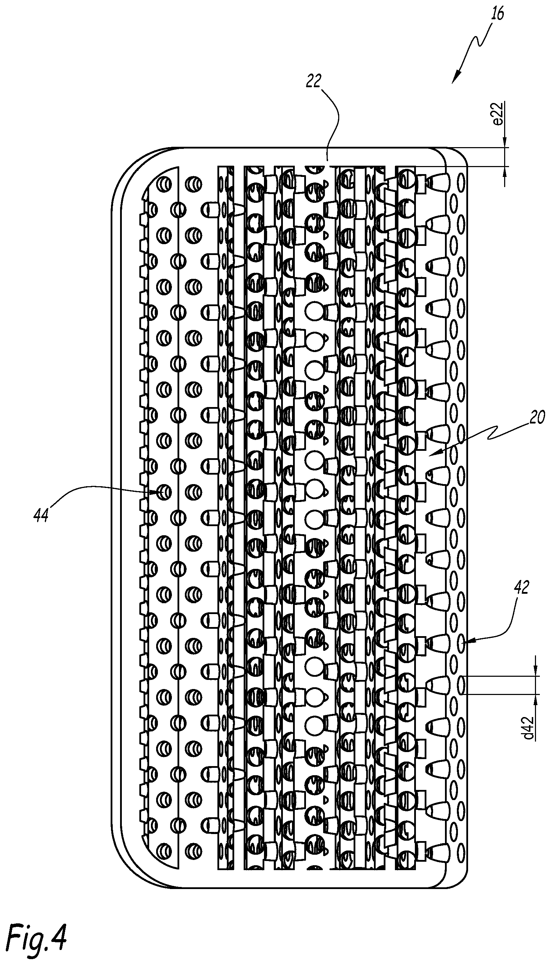

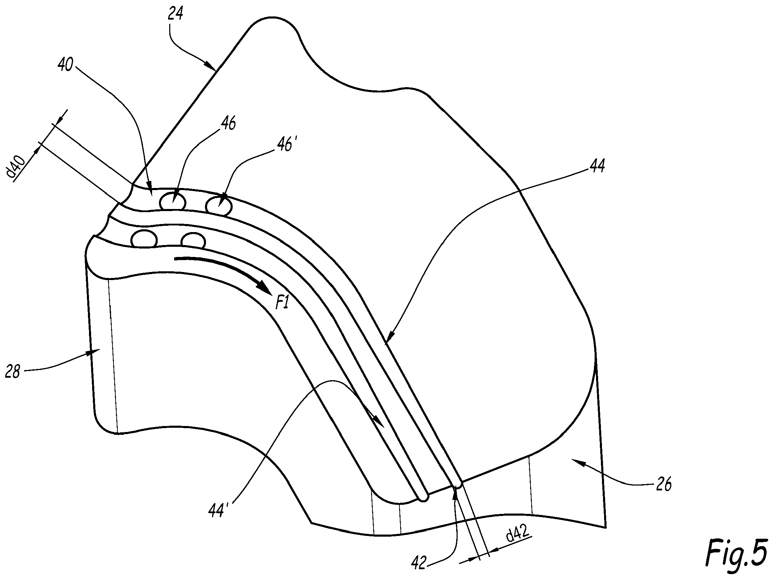

Comme illustré aux figures 2 à 5, le dispositif de filtrage 16 comporte un corps central 20 poreux et une peau extérieure 22 qui entoure le corps central 20.

Le dispositif de filtrage 16 présente une forme tridimensionnelle et est délimité par des faces extérieures. Dans cet exemple, les faces extérieures du dispositif de filtrage 16 comportent notamment une face avant 24, une face arrière 26, une face inférieure 28, une face supérieure 30 ainsi que des faces latérales, non détaillées.

Par exemple, le volume extérieur du dispositif de filtrage, délimité par les faces du dispositif de filtrage, est inférieur ou égal à 100 cm³.

Dans cette description, les termes « avant » et « arrière », de même que les termes « entrée » et « sortie », sont définis en référence au sens de circulation des gaz de coupure lorsque ceux-ci s'échappent vers l'extérieur de l'appareil 2.

Le dispositif de filtrage 16 est monté de façon étanche à l'intérieur du canal d'évacuation 14 de manière à occuper toute la section de ce canal d'évacuation 14. Ainsi, les gaz de coupure circulant dans le canal d'évacuation 14 sont forcés de traverser le dispositif de filtrage 16.

Ici, le dispositif de filtrage 16 est monté par ajustage au sein du canal d'évacuation 14.

Dans cet exemple, le dispositif de filtrage 16 présente des faces de forme arrondie pouvant être concaves et/ou convexes. Cela permet au dispositif de filtrage 16 d'être inséré au sein du canal d'évacuation 14 d'un appareil existant ou d'être incorporé au sein de gammes d'appareils déjà existantes sans avoir besoin d'en modifier l'architecture.

En effet, les canaux d'évacuation 14 et 14' présentent typiquement des formes complexes et non rectilignes. Les dispositifs de filtrage connus présentent généralement des contraintes de forme, les obligeant à être réalisés de forme plane et/ou avec un encombrement élevé. Cela nécessite que les canaux 14 et 14' soient dimensionnés en conséquence. Le dispositif de filtrage 16 ne présente pas ces inconvénients et est donc facile à intégrer au sein de l'appareil 2.

Le dispositif de filtrage 16 présente des orifices d'entrée 40 ménagés sur la face avant 24 du dispositif de filtrage 16 et présente également des orifices de sortie 42 ménagés sur la face arrière 26 du dispositif de filtrage 16. Les faces avant 24 et arrière 26 sont opposées l'une à l'autre et sont chacune disposées de manière à occuper la section correspondante du canal d'évacuation 14 lorsque le dispositif de filtrage 16 est monté au sein de l'appareil 2. En d'autres termes, les gaz de coupure pénètrent à l'intérieur du dispositif de filtrage 16 par les orifices 40 et en ressortent par les orifices de sortie 42.

On note d40 le diamètre d'entrée des orifices d'entrée 40 et on note d42 le diamètre des orifices de sortie 42. Dans cet exemple, les orifices d'entrée 40 présentent tous un même diamètre et sont identiques les uns aux autres. De même, les orifices de sortie 42 présentent un même diamètre et sont identiques les uns aux autres.

Le diamètre d40 des orifices d'entrée 40 est de préférence différent du diamètre d42 des orifices de sortie 42.

Par exemple, le diamètre d40 est supérieur au diamètre d42. Dans cet exemple, le diamètre d40 est égal à 0,5 mm alors que le diamètre d42 est égal à 0,4 mm.

Le corps central 22 comporte des canaux longitudinaux chacun reliant fluidiquement un orifice d'entrée 40 à un orifice de sortie 42. Ces canaux longitudinaux portent ici les références 44 et 44'. Seuls deux canaux longitudinaux sont ainsi référencés sur les figures 2 à 5 mais, en pratique, le dispositif de filtrage 16 comporte plus de deux canaux longitudinaux 44 et 44'.

Les canaux longitudinaux 44 et 44' présentent avantageusement un diamètre variable, c'est-à-dire un diamètre dont la valeur n'est pas constante sur la longueur du canal longitudinal. En pratique, lorsque le diamètre d40 est supérieur au diamètre d42, le canal longitudinal 44, 44' présente un diamètre qui diminue depuis l'orifice d'entrée 40 vers l'orifice de sortie 42.

Avantageusement, les canaux longitudinaux 44 et 44' présentent une forme recourbée, qui est adaptée en fonction de la courbure des faces extérieures. Par exemple, le tracé des canaux 44, 44' suit au moins partiellement la forme recourbée des parois 28 ou 30. Par exemple, ils sont recourbés en suivant un axe longitudinal de forme convexe sur la face inférieure présente une forme convexe. En pratique, les canaux 44 et 44' s'étendent ici, au niveau de leurs extrémités, perpendiculairement aux faces avant 24 et arrière 26.

La forme recourbée des canaux longitudinaux 44 et 44' permet d'une part d'épouser au plus près la forme extérieure du dispositif de filtrage 16, facilitant ainsi son incorporation au sein de l'appareil 2, et permet également d'éviter que les orifices d'entrée 40 et de sortie 42 associés à ce canal longitudinal 44, 44' ne se trouvent alignés et en regard l'un par rapport à l'autre. Cela réduit le risque de rebouclage du courant électrique entre le disjoncteur, les masses métalliques, des conducteurs actifs de raccordement et entre phases, sans qu'il ne soit besoin de réaliser des chicanes au sein des canaux longitudinaux, ce qui aurait pour conséquence d'augmenter l'encombrement du dispositif de filtrage 16.

La forme recourbée des canaux longitudinaux 44 et 44' permet également d'assurer une longueur de cheminement des gaz de coupure qui est suffisante pour assurer le refroidissement de façon satisfaisante.

En outre, le corps central 22 comporte des canaux transversaux 46 et 46' qui s'étendent perpendiculairement à ces canaux longitudinaux 44 et 44' au sein du corps central 20, en mettant en communication fluidique les canaux longitudinaux 44 et 44' entre eux.

Par exemple, les canaux transversaux 46 et 46' présentent un diamètre constant sur toute leur longueur. De préférence, ce diamètre est égal au diamètre des canaux longitudinaux 44 et 44' qu'ils interceptent, c'est-à-dire auxquels ils sont perpendiculaires.

Par exemple, lorsque le canal longitudinal 44 présente un diamètre qui décroît sur sa longueur depuis une première valeur de diamètre vers une deuxième valeur de diamètre, alors les canaux longitudinaux 46 et 46' qui sont situés près de l'orifice d'entrée 40 présentent un diamètre égal à la première valeur, et les canaux transversaux 46 et 46' qui sont situés près de l'orifice de sortie 42 présentent un diamètre égal à la deuxième valeur.

La porosité du corps central 20 est ainsi causée par la présence des canaux transversaux et des canaux longitudinaux connectés entre eux.

Les canaux transversaux 46 et 46' permettent d'équilibrer le flux des gaz de coupure en cas de colmatage local d'un ou plusieurs des canaux longitudinaux 44 et 44'. En effet, le gaz de coupure est typiquement chargé de particules métalliques qui se redéposent sur les parois des canaux longitudinaux lors de sa circulation, ce qui peut entraîner une réduction du diamètre, voire un colmatage des canaux.

De préférence, le pourcentage de remplissage de matière du dispositif de filtrage 16 est supérieur ou égal à 5% et inférieur ou égal à 60%, ce taux de remplissage étant défini comme étant égal au rapport du volume occupé par de la matière au sein du dispositif de filtrage 16, sur le volume total occupé par le dispositif de filtrage 16, ce volume total étant égal au volume délimité par les faces extérieures du dispositif de filtrage 16. Dans cet exemple, le taux de remplissage de matière est égal à 35%.

Ainsi, la porosité du dispositif de filtrage 16 est comprise entre 40% et 95%.

La peau extérieure 22 est étanche, c'est-à-dire qu'elle empêche l'écoulement des gaz de coupure en dehors des orifices d'entrée 40 et des orifices de sortie 42 prévus à cet effet.

Le corps central 20 et la peau extérieure 22 sont réalisés d'un seul tenant dans un même matériau, ici en matière métallique.

Dans cet exemple, on utilise un alliage d'inconel 718, de formule Ni Cr19 Fe19 Nb5 Mo3.

L'épaisseur e22 de la peau extérieure 22 est inférieure ou égale à 5 mm, de préférence inférieure ou égale à 1 mm. A titre illustratif, dans cet exemple, l'épaisseur e22 de la peau extérieure 22 est égale à 0,5 mm.

De préférence, le dispositif de filtrage 16 est réalisé au moyen d'une technique de fabrication additive, aussi dite d'impression trois dimensions, telle que le frittage par laser direct de métal, aussi connu sous l'acronyme DMLS pour « Direct Metal Laser Sintering ».

Cette technique de fabrication est particulièrement avantageuse, car elle permet d'obtenir une pièce de forme complexe avec des parois extérieures pouvant être de forme recourbée et permet aussi de réaliser les canaux longitudinaux de forme recourbée et/ou à diamètre variable, le tout avec une tolérance de fabrication extrêmement précise, pouvant être de l'ordre de 0,05 mm. Ainsi, compte tenu des dimensions réduites des diamètres d40 et d42, la technique de fabrication additive permet d'obtenir une précision et un respect des tolérances de fabrication qu'il n'est pas possible d'obtenir de façon simple avec des techniques de fabrication usuelles de pièces métalliques, telles que le moulage ou l'usinage. Notamment, la technique permet de créer facilement des cavités internes et des contre-dépouilles à l'intérieur du corps central 20 et ce avec une précision satisfaisante.

De cette façon, le dispositif de filtrage 16 peut être fabriqué en fonction des caractéristiques de l'appareil 2 et notamment en fonction de la géométrie des canaux d'évacuation 14 et 14'. Grâce à la compacité du dispositif de filtrage 16 et à la flexibilité de cette technologie de fabrication, le dispositif de filtrage 16 peut être incorporé au sein de gammes d'appareils 2 existantes ou bien au sein d'un appareil 2 déjà existant sans qu'il ne soit nécessaire de modifier la géométrie et/ou l'architecture de l'appareil 2 et notamment de modifier la géométrie du canal d'évacuation 14, 14'.

Un exemple de fabrication du dispositif de filtrage 16 est maintenant décrit.

Initialement, préalablement au début de la fabrication, un modèle tridimensionnel numérique du dispositif de filtrage 16 devant être construit est acquis.

L'outil de fabrication comporte notamment un laser de puissance, tel qu'un laser à fibre optique pouvant émettre une puissance de 200 Watts à 400 Watts.

Ce laser est adapté pour fournir un faisceau laser d'intensité et de direction et de position commandable.

L'outil comporte également une plateforme comprenant deux cuves distinctes dont le fond est plaçable verticalement au moyen d'un piston.

La plateforme est ici fixe mais, en variante, peut être déplaçable par rapport au laser de façon contrôlée, par exemple au moyen d'actionneurs, le laser pouvant alors être fixe.

La première cuve est remplie d'une poudre métallique du matériau servant à fabriquer le dispositif de filtrage 16, en l'occurrence ici une poudre d'un alliage d'inconel, alors que la deuxième cuve est initialement vide.

Une fois le modèle numérique acquis, celui-ci subit une opération de mise en forme automatique, par exemple réalisée par un calculateur électronique, qui comporte le découpage de ce modèle numérique en une pluralité de tranches, ou couches, ayant une épaisseur fixe. Dans cet exemple, l'épaisseur de chaque couche est choisie entre 20 µm et 100 µm. Une même épaisseur est choisie pour toutes les couches du modèle.

Une quantité prédéterminée de poudre est automatiquement transférée depuis la première cuve vers la deuxième cuve, puis le faisceau laser est déplacé par balayage sur cette couche de poudre de manière à former physiquement une première couche du dispositif de filtrage 16. Lorsque le faisceau laser entre en contact avec la couche de poudre métallique, les particules de poudre métallique fondent localement au point d'impact avec le rayon laser puis, en se resolidifiant, forment une couche qui s'étend horizontalement. Lorsqu'une couche déjà formée est présente en dessous, les particules se resolidifient également à cette couche déjà formée.

Le dispositif de filtrage 16 est ainsi formé par ajout de couches successives les unes au-dessus des autres. Une fois chaque couche réalisée, une quantité prédéterminée de poudre métallique est transférée à nouveau depuis la première cuve vers la deuxième cuve. Les opérations sont ainsi répétées jusqu'à la fabrication complète du dispositif de filtrage 16.

## Revendications

1. Dispositif (16, 16') de filtrage de gaz de coupure pour un appareil (2) de coupure d'un courant électrique, ce dispositif de filtrage comportant:
- un corps central (20) poreux incluant des canaux longitudinaux (44, 44') et des canaux transversaux (46, 46') qui mettent en communication fluidique les canaux longitudinaux entre eux, les canaux longitudinaux (44, 44') présentant une forme recourbée ; et
- une peau extérieure (22) étanche qui entoure le corps central (20) et qui comporte des orifices d'entrée (40) et des orifices de sortie (42), chaque canal longitudinal (44, 44') s'étendant entre un orifice d'entrée (40) et un orifice de sortie (42), la peau extérieure (22) et le corps central (20) formant une pièce rigide d'un seul tenant réalisée en matière métallique.

2. Dispositif de filtrage (16, 16') selon la revendication 1, **caractérisé en ce que** les canaux longitudinaux (44, 44') présentent un diamètre variable.

3. Dispositif de filtrage (16, 16') selon la revendication 2, **caractérisé en ce que** le diamètre (d42) de l'orifice de sortie (42) est inférieur au diamètre (d40) de l'orifice d'entrée (40) correspondant, le diamètre intérieur du canal longitudinal (44, 44') qui débouche sur ses orifices d'entrée et de sortie (40, 42) diminuant depuis l'orifice d'entrée (40) vers l'orifice de sortie (42).

4. Dispositif selon l'une quelconque des revendications précédentes, **caractérisé en ce qu'**il comporte des faces extérieures (28, 30) de forme recourbée, la courbure des canaux longitudinaux (44, 44') étant adaptée en fonction de la courbure desdites faces extérieures.

5. Dispositif de filtrage (16, 16') selon l'une quelconque des revendications précédentes, **caractérisé en ce que** la matière métallique est un alliage d'inconel.

6. Dispositif de filtrage (16, 16') selon l'une quelconque des revendications précédentes, **caractérisé en ce que** le volume extérieur du dispositif de filtrage (16 ; 16'), délimité par les faces extérieures du dispositif de filtrage, est inférieur ou égal à 100 cm³.

7. Dispositif de filtrage (16, 16') selon l'une quelconque des revendications précédentes, **caractérisé en ce que** le taux de remplissage du dispositif de filtrage (16) est compris entre 5% et 60%, ce taux de remplissage étant défini comme étant égal au rapport du volume occupé par de la matière au sein du dispositif de filtrage (16), sur le volume total occupé par le dispositif de filtrage (16), ce volume total étant égal au volume délimité par les faces extérieures du dispositif de filtrage (16).

8. Dispositif de filtrage (16, 16') selon l'une quelconque des revendications précédentes, **caractérisé en ce qu'**il est fabriqué au moyen d'un procédé de fabrication additive par fusion laser directe de métal.

9. Appareil (2) de coupure d'un courant électrique, cet appareil comprenant :
- des contacts électriques séparables (4, 4', 6, 6') ;
- au moins une chambre d'extinction d'un arc électrique (10, 10'), ménagé à l'intérieur de l'appareil (2) et incluant un empilement (12, 12') de plaques de séparation d'arc destinées à éteindre un arc électrique apparaissant lors de la séparation des contacts électriques, cette chambre de coupure (10, 10') étant reliée fluidiquement à l'extérieur de l'appareil par un canal d'évacuation (14, 14') des gaz de coupure ;
- un dispositif de filtrage (16, 16') des gaz de coupure, monté dans le canal d'évacuation (14, 14') ;
**caractérisé en ce que** le dispositif de filtrage (16, 16') est conforme à l'une quelconque des revendications précédentes.

## Patentansprüche

1. Vorrichtung (16, 16') zur Filterung von Schaltgasen für ein Gerät (2) zum Abschalten eines elektrischen Stroms, wobei diese Filterungsvorrichtung Folgendes umfasst:
- einen porösen zentralen Körper (20), der Längskanäle (44, 44') und Querkanäle (46, 46'), welche die Längskanäle miteinander in Fluidverbindung bringen, beinhaltet, wobei die Längskanäle (44, 44') eine gekrümmte Form aufweisen; und
- eine dichte Außenhaut (22), die den zentralen Körper (20) umgibt und die Einlassöffnungen (40) und Auslassöffnungen (42) umfasst, wobei sich jeder Längskanal (44, 44') zwischen einer Einlassöffnung (40) und einer Auslassöffnung (42) erstreckt, wobei die Außenhaut (22) und der zentrale Körper (20) ein einstückiges starres Teil bilden, das aus einem metallischen Material hergestellt ist.

2. Filterungsvorrichtung (16, 16') nach Anspruch 1, **dadurch gekennzeichnet, dass** die Längskanäle (44, 44') einen variablen Durchmesser aufweisen.

3. Filterungsvorrichtung (16, 16') nach Anspruch 2, **dadurch gekennzeichnet, dass** der Durchmesser (d42) der Auslassöffnung (42) kleiner ist als der Durchmesser (d40) der entsprechenden Einlassöffnung (40), wobei der Innendurchmesser des Längskanals (44, 44'), der in seine Einlass- und Auslassöffnung (40, 42) mündet, von der Einlassöffnung (40) zur Auslassöffnung (42) abnimmt.

4. Vorrichtung nach einem der vorhergehenden Ansprüche, **dadurch gekennzeichnet, dass** sie Außenflächen (28, 30) mit gekrümmter Form umfasst, wobei die Krümmung der Längskanäle (44, 44') an die Krümmung der Außenflächen angepasst ist.

5. Filterungsvorrichtung (16, 16') nach einem der vorhergehenden Ansprüche, **dadurch gekennzeichnet, dass** das metallische Material eine Inconel-Legierung ist.

6. Filterungsvorrichtung (16, 16') nach einem der vorhergehenden Ansprüche, **dadurch gekennzeichnet, dass** das Außenvolumen der Filterungsvorrichtung (16; 16'), das durch die Außenflächen der Filterungsvorrichtung begrenzt wird, kleiner als oder gleich 100 cm³ ist.

7. Filterungsvorrichtung (16, 16') nach einem der vorhergehenden Ansprüche, **dadurch gekennzeichnet, dass** der Füllungsgrad der Filterungsvorrichtung (16) zwischen 5 % und 60 % liegt, wobei dieser Füllungsgrad derart definiert wird, dass er gleich dem Verhältnis des Volumens, das in der Filterungsvorrichtung (16) von Material eingenommen wird, zu dem von der Filterungsvorrichtung (16) eingenommenen Gesamtvolumen ist, wobei dieses Gesamtvolumen gleich dem Volumen ist, das durch die Außenflächen der Filterungsvorrichtung (16) begrenzt wird.

8. Filterungsvorrichtung (16, 16') nach einem der vorhergehenden Ansprüche, **dadurch gekennzeichnet, dass** sie mittels eines Verfahrens zur additiven Fertigung durch direktes Laserschweißen von Metall gefertigt wird.

9. Gerät (2) zum Abschalten eines elektrischen Stroms, wobei dieses Gerät Folgendes umfasst:
- trennbare elektrische Kontakte (4, 4', 6, 6');
- wenigstens eine Kammer (10, 10') zum Löschen eines elektrischen Lichtbogens, die im Inneren des Geräts (2) gebildet ist und einen Stapel (12, 12') von Lichtbogentrennplatten beinhaltet, die dazu bestimmt sind, einen elektrischen Lichtbogen zu löschen, der bei der Trennung der elektrischen Kontakte auftritt, wobei diese Abschaltkammer (10, 10') durch einen Schaltgasevakuierungskanal (14, 14') fluidmäßig mit der Außenseite des Geräts verbunden ist;
- eine Vorrichtung (16, 16') zur Filterung der Schaltgase, die in dem Evakuierungskanal (14, 14') montiert ist;
**dadurch gekennzeichnet, dass** die Filterungsvorrichtung (16, 16') gemäß einem der vorhergehenden Ansprüche ausgebildet ist.

## Claims

1. Device (16, 16') for filtering cut-off gases for an electrical current cut-off apparatus (2), the filtering device comprising:
- a central porous body (20) including longitudinal channels (44, 44') and transverse channels (46, 46') which place the longitudinal channels in fluidic communication with one another, the longitudinal channels (44, 44') having a curved shape; and
- an impermeable outer skin (22) which surrounds the central body (20) and which has inlet orifices (40) and outlet orifices (42), each longitudinal channel (44, 44') extending between an inlet orifice (40) and an outlet orifice (42), the outer skin (22) and the central body (20) forming a rigid part in one piece which is made of metallic material.

2. Filtering device (16, 16') according to claim 1, **characterised in that** the longitudinal channels (44, 44') have a variable diameter.

3. Filtering device (16, 16') according to claim 2, **characterised in that** the diameter (d42) of the outlet orifice (42) is smaller than the diameter (d40) of the corresponding inlet orifice (40), the inside diameter of the longitudinal channel (44, 44') which opens into its inlet and outlet orifices (40, 42) becoming smaller from the inlet orifice (40) to the outlet orifice (42).

4. Device according to any one of the preceding claims, **characterised in that** it has outside faces (28, 30) of curved shape, the curvature of the longitudinal channels (44, 44') being adapted according to the curvature of said outside faces.

5. Filtering device (16, 16') according to any one of the preceding claims, **characterised in that** the metallic material is an alloy of inconel.

6. Filtering device (16, 16') according to any one of the preceding claims, **characterised in that** the outside volume of the filtering device (16, 16'), delimited by the outside faces of the filtering device, is less than or equal to 100 cm³.

7. Filtering device (16, 16') according to any one of the preceding claims, **characterised in that** the degree of filling of the filtering device (16) is between 5% and 60%, the degree of filling being defined as being equal to the ratio of the volume occupied by material within the filtering device (16) to the total volume occupied by the filtering device (16), the total volume being equal to the volume delimited by the outside faces of the filtering device (16).

8. Filtering device (16, 16') according to any one of the preceding claims, **characterised in that** it is manufactured by means of a method of additive manufacture by direct metal laser melting.

9. Electrical current cut-off apparatus (2), the apparatus comprising:
- separable electrical contacts (4, 4', 6, 6');
- at least one electric arc extinction chamber (10, 10') formed inside the apparatus (2) and including a stack (12, 12') of arc separation plates for extinguishing an electric arc which appears when the electrical contacts are separated, the cut-off chamber (10, 10') being fluidically connected to the outside of the apparatus by an evacuation channel (14, 14') for the cut-off gases;
- a filtering device (16, 16') for the cut-off gases, mounted in the evacuation channel (14, 14');
**characterised in that** the filtering device (16, 16') is in accordance with any one of the preceding claims.
